# EUROPÄISCHE PATENTSCHRIFT

(11) **EP 2 675 545 B1**
(45) Veröffentlichungstag und Bekanntmachung des Hinweises auf die Patenterteilung: **22.06.2016**
(21) Anmeldenummer: 12713854.3
(22) Anmeldetag: 17.02.2012
(51) Int. Cl.: B01D 35/143, B01D 46/00, G01N 15/08

(54) **FILTERPRÜFEINRICHTUNG**
FILTER TEST DEVICE
DISPOSITIF DE CONTRÔLE DE FILTRES

(30) Priorität: 17.02.2011 AT 2072011
(43) Veröffentlichungstag der Anmeldung: 25.12.2013
(73) Patentinhaber: Hirtenberger Aktiengesellschaft, 2552 Hirtenberg (AT)
(72) Erfinder: Mayer, Hanspeter, 5421 Adnet (AT)
(74) Vertreter: Wirnsberger, Gernot
(86) Internationale Anmeldenummer: PCT/AT2012/050022
(87) Internationale Veröffentlichungsnummer: WO 2012/109691

(56) Entgegenhaltungen:
- EP-A1- 2 425 886
- EP-A2- 0 240 881
- WO-A1-01/94893
- DE-A1- 3 537 896
- US-A- 4 979 390
- US-A1- 2009 120 062

## Beschreibung

Die Erfindung betrifft eine Prüfeinrichtung zur Messung einer Durchlässigkeit und/oder Homogenität eines in einem Abgastrakt eines Kraftfahrzeuges eingebauten, gas- und/oder flüssigkeitsdurchlässigen Filters oder Katalysators, bei welchem nur ein stromabwärts liegendes Ende zugänglich ist.

Des Weiteren betrifft die Erfindung ein Verfahren zur Messung einer Durchlässigkeit und/oder Homogenität eines gas- und/oder flüssigkeitsdurchlässigen Filters oder Katalysators, insbesondere eines in einem Abgastrakt eines Kraftfahrzeuges eingebauten Filters oder Katalysators.

Abgase von mit Diesel betriebenen Kraftfahrzeugmotoren, aber auch von Ottomotoren oder Motoren sonstiger Brennkraftmaschinen sowie von Brenner- und/oder Heizanlagen oder Blockheizkraftwerken werden zur Schonung der Umwelt üblicherweise gereinigt. Hierbei kommen je nach Abgaszusammensetzung, Abgastemperatur und gewünschtem Reinigungsergebnis verschiedene Verfahren zur Anwendung. Gemeinsam ist den einzelnen Verfahren, dass gasdurchlässige Filter und/oder Katalysatoren eingesetzt werden, um beispielsweise Rußpartikel aus einem Abgas zu filtern oder giftige Bestandteile eines Abgases katalytisch in weniger giftige oder ungiftige Bestandteile umzuwandeln.

Strömt Abgas in einem Abgastrakt und trifft dort auf einen Filter oder Katalysator, so erfährt das Abgas einen Gegendruck. Dieser Gegendruck ist bei einem neuen Filter oder Katalysator ein Minimum. Mit zunehmender Einsatzdauer eines Filters oder Katalysators kann dieser durch im Abgas befindliche Partikel oder Schwebstoffe zunehmend beladen werden, wodurch der Gegendruck ansteigt. Typische Beispiele betreffen eine Beladung eines Filters im Abgas eines mit Diesel betriebenen Kraftfahrzeuges durch zunehmende Ruß- und/oder Aschebeladung.

Ein Ansteigen eines Gegendruckes mit zunehmender Einsatzzeit eines Filters oder Katalysators kann in einem gewissen Maß hingenommen werden. Mit zunehmendem Gegendruck sinkt allerdings eine Motorleistung und/oder steigt ein Kraftstoffverbrauch. Die Filter bzw. Katalysatoren müssen daher grundsätzlich in regelmäßigen Abständen gereinigt werden. Zum Beispiel können bei dieselbetriebenen Kraftfahrzeugen in einem Filter anhaftende Rußpartikel verbrannt und damit zu gasförmigen Komponenten umgesetzt werden, wenn dem Filter ein Oxidationskatalysator vorgeschaltet ist, der Stickstoffmonoxid zu Stickstoffdioxid umwandelt, welches sich bei bestimmten Temperaturen mit den Rußpartikeln unter Bildung gasförmiger Komponenten umsetzt. Allerdings tendieren Filter und Katalysatoren in passiv regenerierenden Systemen mit zunehmender Einsatzzeit zur Verblockung. Dies trifft umso mehr für aktiv regenerierende Systeme zu, bei denen der Filter oder Katalysator von Zeit zu Zeit z. B. durch aktives Aufheizen des Filters oder Katalysators regeneriert wird.

Es bestehen bereits Ansätze, um einen Gegendruck durch On-Board-Diagnose während eines Betriebes eines Kraftfahrzeuges kontinuierlich zu verfolgen. Entsprechende Systeme stecken allerdings in den Kinderschuhen und sind noch nicht ausgereift. Für die überwiegende Anzahl von Filtern und Katalysatoren ist es erforderlich, diese im Rahmen einer Reinigung oder Wartung gesondert zu überprüfen. Dabei wird einerseits vor einer Reinigung eine Durchlässigkeit des zu reinigenden Filters oder Katalysators geprüft. Andererseits wird nach einer Reinigung das Reinigungsergebnis überprüft, indem der Filter oder Katalysator nochmals in Bezug auf eine Durchlässigkeit eines Gases oder gegebenenfalls einer Flüssigkeit untersucht wird. Zu diesem Zweck sind die Filter oder Katalysatoren aus dem Abgastrakt auszubauen und in einer geeigneten Vorrichtung zu untersuchen bzw. prüfen.

Bekannte Vorrichtungen zur Messung einer Durchlässigkeit eines gas- und/oder flüssigkeitsdurchlässigen Filters oder Katalysators sind voluminös aufgebaut und erlauben lediglich eine Prüfung eines Filters oder Katalysators im ausgebauten Zustand, wobei ein gesamter Filterquerschnitt auf einen Gegendruck geprüft wird. Dies erfolgt z. B. durch Drucksensoren im Abgasstrom oder auf Prüfeinrichtungen, bei welchen ein zu prüfender Filter aufgespannt und der gesamte Filterquerschnitt mit einem Prüfmedium durchströmt wird. Wünschenswert wäre es jedoch, eine Vorrichtung zur Verfügung zu haben, mit der ein Filter auch im eingebauten Zustand bzw. unmittelbar im Abgastrakt genau geprüft werden kann. Es würde sich dann ein aufwendiger Ausbau des Filters oder Katalysators erübrigen. Ein anderer Nachteil bekannter Vorrichtungen besteht darin, dass diese lediglich ungenaue Prüfergebnisse liefern; eine Auflösung eines auftretenden Gegendruckes ist entweder ungenau oder aufgrund einer ungleichmäßigen Durchströmung schwankend. Darüber hinaus ist in Bezug auf Wall-flow-Filter nur eine Messung eines Filters oder Katalysators über dessen gesamten Querschnitt möglich. Es wäre jedoch von Vorteil, wenn auch einzelne Bereiche einer Oberfläche gesondert gemessen werden könnten, um eventuell einzelne Problemzonen in einem Filter oder Katalysator segmentweise erkennen zu können.

Aus dem Dokument EP 0 240 881 A2 ist eine Prüfvorrichtung zum Prüfen der Luftdurchlässigkeit von flächigen Gegenständen bekannt geworden.

Ferner ist aus dem Dokument US 2009/0120062 A1 eine Vorrichtung zum Erkennen von Fehlern in Filtern bekannt geworden.

Aufgabe der Erfindung ist es, eine Prüfeinrichtung der eingangs genannten Art anzugeben, bei welcher insbesondere die vorstehend dargelegten Nachteile beseitigt oder zumindest verringert sind.

Eine weitere Aufgabe besteht darin, ein Verfahren der eingangs genannten Art anzugeben, mit dem eine Durchlässigkeit und/oder Homogenität eines Filters oder Katalysators bereichsweise mit hoher Genauigkeit überprüft bzw. ermittelt werden kann.

Die Aufgabe der Angabe einer verbesserten Prüfeinrichtung wird erfindungsgemäß dadurch gelöst, dass bei einer Prüfeinrichtung der eingangs genannten Art ein gegebenenfalls flexibles Gehäuse mit einem ersten gas- und/oder flüssigkeitsdurchlässigen Ende, welches offen ausgebildet und umfangsseitig von einer Dichtung umgeben ist, und einem zweiten Ende und zumindest einem innerhalb des Gehäuses angeordneten Drucksensor und zumindest eine Regeleinrichtung, welcher Druckluft über eine Druckluftleitung zugeführt werden kann, mit einer Drossel und/oder einem Ventil vorgesehen sind, wobei mit der Regeleinrichtung Luft mit einem vorbestimmten, variabel einstellbaren Volumen- oder Massenstrom unter einem Überdruck von 0,1 bar bis 0,6 bar zum ersten Ende des Gehäuses transportierbar ist, wobei das Gehäuse im Bereich des zweiten Endes des Gehäuses im Wesentlichen geschlossen ist und wobei eine Leitung am zweiten Ende in das Gehäuse mündet, welche mit der Regeleinrichtung in Verbindung steht.

Ein mit der Erfindung erzielter Vorteil ist darin zu sehen, dass eine einfach aufgebaute Prüfeinrichtung zur Verfügung gestellt wird, die insbesondere als Handgerät ausgebildet sein kann, somit klein und einfach handhabbar ist. Alternativ kann die Prüfeinrichtung auch als klein dimensionierte Sensoreinheit für eine automatisierte Prüfung ausgebildet sein und im Einsatz z. B. mit einem steuerbaren Roboterarm an einen Filter oder Katalysator angestellt werden. Die Prüfeinrichtung kann in beiden Fällen ohne Weiteres an eine Oberfläche eines Filters oder Katalysators angestellt werden, der in einem Abgastrakt eines Kraftfahrzeuges oder einem anderen Abgastrakt befestigt ist. Dies bedeutet für Kraftfahrzeuge, dass in der Regel bloß eine Schelle zu lösen und der Abgastrakt zu öffnen ist, um eine Filterdurchlässigkeit überprüfen zu können. Insbesondere für schwer zugängliche Stellen kann das Gehäuse auch flexibel ausgebildet sein, sodass auch Filter überprüfbar sind, die sich an solchen Stellen befinden.

Die erfindungsgemäße Prüfeinrichtung weist einen Drucksensor und im Zusammenhang damit eine Regeleinrichtung zur variablen Einstellung eines Volumen- oder Massenstromes bzw. Überdruckes oder Unterdruckes am ersten Ende des Gehäuses auf. Der Drucksensor und die Regeleinrichtung stehen mit einer Recheneinheit, beispielsweise einem Mikroprozessor, in Verbindung, was eine einfache Kalibrierung der Prüfeinrichtung ermöglicht. Hierzu wird die Prüfeinrichtung mit dem ersten Ende des Gehäuses an eine dichte Fläche angestellt und beispielsweise mit einem Luftvolumenstrom beaufschlagt, der einen statischen Druck von z. B. 0,6 bar Überdruck verursacht. Der sich im Gehäuse einstellende Druck dient als Referenzpunkt für eine 100%ige Verblockung eines Filters. Als zweiter Referenzpunkt wird ein neuer Filter oder Katalysator verwendet, der ein Minimum an Gegendruck erzeugt und hierbei ebenfalls mit einem regelbaren Volumenstrom an Druckluft durchströmt bzw. beaufschlagt wird; der Volumenstrom wird dann soweit verändert, bis dieser eine gerade zuverlässig bzw. sicher messbare Größe darstellt bzw. ergibt (z. B. 0,01 bar). Mit dem maximalen Gegendruck und dem minimalen Abgasvolumenstrom kann nun jeder Filter oder Katalysator vermessen werden. Je nach Verschmutzung treten dabei Messwerte zwischen 0,01 und 0,6 bar auf. Filter, die niedrigere Messwerte ergeben, können gebrochen oder durchgebrannt sein.

Es kann auch der Volumenstrom von einem Minimalwert ausgehend kontinuierlich erhöht werden und bis zu einem maximalen Gegendruckwert gesteigert werden. Aus einer derartigen Messung kann eine Drosselkurve eines Prüflings ermittelt werden, die weitere Aufschlüsse über Art und Ausmaß einer Verschmutzung desselben geben kann.

Um ein möglichst genaues Messergebnis zu erhalten, ist das erste Ende des Gehäuses umfangsseitig von einer Dichtung umgeben.

Das erste Ende des Gehäuses kann für verschiedene Anwendungsfälle mit einer unterschiedlichen Querschnittsfläche von z. B. 10 mm² bis 500 cm² ausgebildet sein. Eine exakte Größe bemisst sich nach einer Filtergröße, einem verwendeten Volumen- bzw. Massenstrom und erwarteten Gegendrücken. Insbesondere für übliche Filter von Kraftfahrzeugen ist es zweckmäßig und bevorzugt, dass das erste Ende des Gehäuses mit einer Querschnittsfläche von 5 cm² bis 30 cm², vorzugsweise 10 cm² bis 20 cm², ausgebildet ist. Durch eine entsprechend kleine Ausführung einer Querschnittsfläche sind insbesondere in Bezug auf Kraftfahrzeuge alle gängigen Filter oder Katalysatoren überprüfbar, da diese in der Regel mit weitaus größeren stirn- bzw. endseitigen Querschnittsflächen ausgebildet sind. Darüber hinaus ergibt sich dadurch auch die Möglichkeit, insbesondere in Bezug auf Wall-flow-Filter, einzelne Filter oder Katalysatoren segmentweise bzw. bereichsweise zu überprüfen. Das kann insbesondere dann von Bedeutung sein, wenn ein Filter im Einsatz über den Querschnitt betrachtet ungleichmäßigen Belastungen ausgesetzt ist. Zudem lässt sich bei neuen Filtern oder Katalysatoren feststellen, ob diese in einzelnen Bereichen gleiche Eigenschaften aufweisen oder ob eine Beschichtung eines Filters in einzelnen Segmenten gleichmäßig ist, indem eine segmentweise Prüfung durchgeführt wird.

Das Gehäuse, das wie erwähnt flexibel sein kann, kann mit einer beliebigen Form ausgebildet sein, ist mit Vorteil aber länglich, insbesondere zylindrisch, ausgebildet. Abgesehen von peripheren Versorgungseinrichtungen weist die Prüfeinrichtung in zweckmäßiger Weise maximal eine Länge von etwa 25 cm auf, damit diese einfach mit einer Hand an einen Filter angestellt und gegebenenfalls in einen Abgastrakt eines Kraftfahrzeuges eingeführt werden kann. Grundsätzlich kann das Gehäuse aber eine Länge von 10 mm bis 100 cm aufweisen, je nachdem, ob die Vorrichtung z. B. als kleine Sonde oder Prüfvorrichtung für große Kraftwerksfilter eingesetzt wird.

Das erste Ende des Gehäuses ist gas- und/oder flüssigkeitsdurchlässig und kann beispielsweise mit einem grobmaschigen Gitter versehen sein. Bevorzugt ist es jedoch, dass das erste Ende im Querschnitt offen ausgebildet ist.

Erfindungsgemäß ist das Gehäuse im Bereich des zweiten Endes des Gehäuses im Wesentlichen geschlossen und steht über eine Leitung mit der Regeleinrichtung in Verbindung. Dabei mündet die Leitung am zweiten Ende des Gehäuses in das Gehäuse. Die Regeleinrichtung kann bei dieser Ausführungsvariante in einem Behälter mit einem Griff oder Tragegurt angeordnet sein, wobei der Behälter außenseitig einen Druckluftanschluss und optional einen Stromanschluss aufweist. In diesem Fall ist die Prüfeinrichtung in zwei gesonderte Untereinheiten geteilt, wobei eine Untereinheit einen Messkopf darstellt und in einem Behälter, als weitere Untereinheit, die für die Erzeugung eines Volumen- oder Massenstromes bzw. Überdruckes oder gegebenenfalls Unterdruckes erforderlichen Komponenten einschließlich einer Recheneinheit zur Auswertung von Messergebnissen angeordnet sind. Die Ausbildung des Behälters mit einem Druckluftanschluss und optional einem Stromanschluss erlaubt es, auf ein gesondertes Fördermittel zu verzichten. Vielmehr kann über eine in Werkstätten üblicherweise vorhandene Druckluftleitung die für die Messung und gegebenenfalls vorhergehende Kalibrierung erforderliche Druckluft zugeführt werden. Die Regeleinrichtung weist eine Drossel und/oder ein Ventil auf, sodass ein vorbestimmter Volumen- oder Massenstrom bzw. Überdruck von z. B. maximal 0,5 bar einstellbar ist.

Bei einer erfindungsgemäßen Prüfeinrichtung kann zusätzlich eine elastische stabförmige Sonde vorgesehen sein, die einen Durchmesser von weniger als 1 mm aufweist und am Gehäuse abnehmbar oder abrollbar angeordnet ist. Mit einer derartigen Sonde kann insbesondere bei Wall-flow-Filtern auf einfache Weise durch Einführen in einen Filter oder Katalysator bzw. eine Zelle desselben festgestellt werden, ab welcher Tiefe der Filter oder Katalysators stark verblockt ist. Dies erlaubt weitere Aufschlüsse über eine Qualität eines Filters oder Katalysators oder deren Verschmutzung auch in der Tiefe der Filterzellen.

Die weitere Aufgabe der Erfindung wird bei einem Verfahren der eingangs genannten Art gelöst, wenn ein gegebenenfalls flexibles Gehäuse einer erfindungsgemäßen Prüfeinrichtung mit einem ersten gas- und/oder flüssigkeitsdurchlässigen Ende und einem zweiten Ende mit dem ersten Ende an eine größer als ein Querschnitt des ersten Endes ausgebildete gas- und/oder flüssigkeitsdurchlässige Oberfläche des Filters oder Katalysators angestellt wird, wonach das Gehäuse im Inneren mit einem vorbestimmten, definierten Volumen- oder Massenstrom beaufschlagt wird, sodass Luft in den Filter oder Katalysator gepresst wird, und ein sich im Gehäuse einstellender Druck gemessen wird, wonach aus dem sich einstellenden Druck eine Durchlässigkeit und/oder Homogenität des Filters oder Katalysators ermittelt wird.

Ein mit einem erfindungsgemäßen Verfahren erzielter Vorteil ist insbesondere darin zu sehen, dass eine Durchlässigkeit und/oder Homogenität eines Filters oder Katalysators bereichsweise auf einfache Weise genau bestimmt werden kann. Hierfür wird bevorzugt eine erfindungsgemäße Prüfeinrichtung eingesetzt, wobei die Kalibrierung wie vorstehend erläutert durchgeführt werden kann.

Bevorzugt ist es, dass das Innere des Gehäuses mit einem geringen Überdruck von 0,1 bis 0,6 bar beaufschlagt wird, insbesondere wenn bei einem Filter eine Stirnseite nicht zugänglich ist, sondern nur ein stromabwärts zugängliches Ende desselben. Bevorzugt ist vorgesehen, um eine Qualität eines Messergebnisses zu erhöhen, dass an verschiedenen Bereichen der Oberfläche des Filters oder Katalysators Messungen durchgeführt werden, wobei die Messergebnisse gegebenenfalls gemittelt werden können. Dadurch lässt sich insbesondere bei Wall-flow-Filtern eine segmentweise Beurteilung des Filters oder Katalysators vornehmen. Eine Mittelung der Messergebnisse kann zweckmäßig sein, um einen durchschnittlichen Zustand des Filters oder Katalysators, aber auch eine Qualität eines Filtersubstrates bzw. einer Beschichtung eines Filters zu charakterisieren.

Weitere Merkmale, Vorteile und Wirkungen der Erfindung ergeben sich aus den nachfolgend dargestellten Ausführungsbeispielen. In den Zeichnungen, auf weiche dabei Bezug genommen wird, zeigen:
Fig. 1 eine stark schematisierte Darstellung einer Prüfeinrichtung;
Fig. 2 einen Querschnitt einer Prüfeinrichtung und eines Filters;
Fig. 3 eine Ausführungsvariante einer Prüfeinrichtung;
Fig. 4 eine weitere Ausführungsvariante einer Prüfeinrichtung.

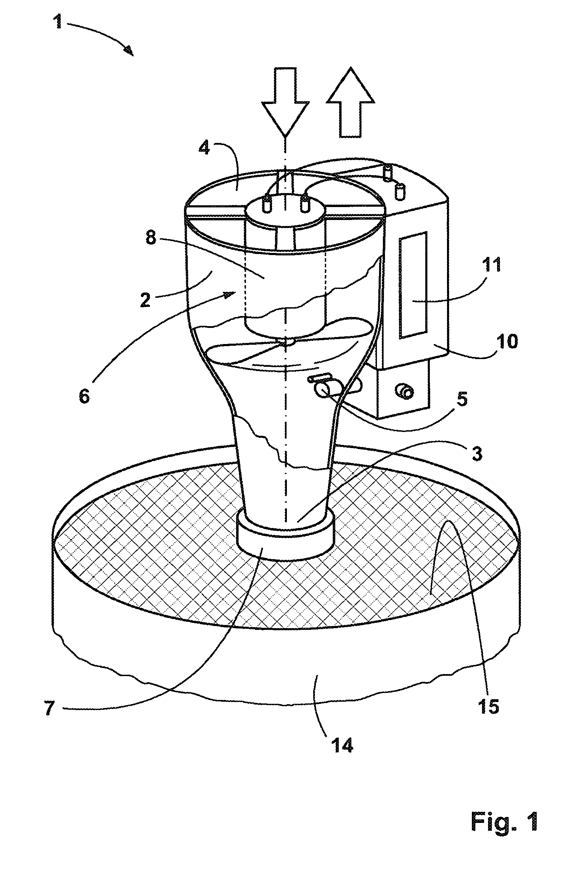

In Fig. 1 ist eine nicht vom Schutzbereich umfasste Prüfeinrichtung 1 näher dargestellt. Die Prüfeinrichtung 1 umfasst ein Gehäuse 2, das ein erstes Ende 3 und ein zweites Ende 4 aufweist. Sowohl das erste Ende 3 als auch das zweite Ende 4 des Gehäuses 2 ist offen ausgebildet, wenngleich an einem oder beiden der Enden 3, 4 jeweils ein Gitter vorgesehen sein kann, um das Innere des Gehäuses 2 nach außen hin zu verschließen. In jedem Fall ist aber das erste Ende 3 wie auch das zweite Ende 4 durchlässig in Bezug auf Gase oder gegebenenfalls Flüssigkeiten. Im Bereich des ersten Endes 3 des Gehäuses 2 ist umfangsseitig eine Dichtung 7 vorgesehen, die am Gehäuse 2 außenseitig anliegt und etwas über das erste Ende 3 des Gehäuses 2 vorsteht. Die Dichtung 7 besteht in der Regel aus einem Kunststoff, der für Dichtungen geeignet ist. Das Gehäuse 2 hingegen besteht bevorzugt aus einem Stahl oder einer Aluminiumlegierung. Möglich ist es aber in dieser wie auch in den nachfolgend dargestellten Ausführungsvarianten, dass das Gehäuse 2 aus einem zumindest in einzelnen Abschnitten flexiblen Material, insbesondere einem Kunststoff, gebildet ist. Hinsichtlich einer Flexibilität des Gehäuses 2 kann auch vorgesehen sein, dass einzelne Segmente desselben gegeneinander schwenkbar und/oder in Art eines Teleskops ausfahrbar sind, sodass nicht ohne Weiteres zugängliche Stellen eines Prüflings erreicht werden können.

Im Inneren des Gehäuses 2, das sich bei der Ausführungsvariante gemäß Fig. 1 vom zweiten Ende 4 des Gehäuses 2 zum ersten Ende 3 des Gehäuses 2 hin verjüngt, ist ein Fördermittel zum Fördern von Luft oder einer Flüssigkeit in Richtung der dargestellten Pfeile, also vom zweiten Ende 4 des Gehäuses 2 zum ersten Ende 3 des Gehäuses 2 oder umgekehrt vorgesehen. Das Fördermittel ist bevorzugt ein Axialgebläse 8, das mit einer Halterung 9 im Bereich des oberen, zweiten Endes 4 des Gebläses 2 befestigt ist. In dieser Ausführungsvariante ist das Axialgebläse 8 Teil einer Regeleinrichtung 6 zur Erzeugung eines Volumen- oder Massenstromes bzw. Überdruckes oder Unterdruckes im Gehäuse 2. Im Inneren des Gehäuses 2 ist des Weiteren ein Drucksensor 5 vorgesehen, der unterhalb des Axialgebläses 8, benachbart zum ersten Ende 3 des Gehäuses 2, angeordnet ist.

An einer Außenseite des Gehäuses 2 ist eine Steuereinrichtung 10 vorgesehen, die mit dem Axialgebläse 8 in Verbindung steht und dieses mit Strom versorgt. Des Weiteren ist über die Steuereinrichtung 10 das Axialgebläse 8 steuerbar, sodass variabel ein Überdruck oder gegebenenfalls Unterdruck an einer Oberfläche 15 eines Filters 14 oder Katalysators einstellbar ist. Des Weiteren steht die Steuereinrichtung 10 mit dem Drucksensor 5 in Verbindung, sodass Messdaten des Drucksensors 5 ausgelesen werden können. Hierfür ist in der Steuereinrichtung 10 zusätzlich eine nicht näher dargestellte Recheneinheit vorgesehen. Im Übrigen umfasst die Steuereinrichtung 10 auch ein Display 11, über welches Messergebnisse ausgegeben werden können bzw. auf dem Messergebnisse ablesbar sind.

Bei der Prüfung eines Filters 14 oder Katalysators wird die Prüfeinrichtung 1 gemäß Fig. 1 zur Kalibrierung mit dem ersten Ende 3 des Gehäuses 2 vorerst an eine völlig dichte Oberfläche angestellt und mit dem Axialgebläse 8 ein statischer Überdruck von 0,6 bar erzeugt, der mit dem Drucksensor 5 gemessen bzw. festgestellt wird. Anschließend wird eine Messung an einem völlig intakten bzw. neuen Filter 14 bzw. Katalysator durchgeführt, wobei ein noch zuverlässig messbarer bzw. regelbarer Volumen- oder Massenstrom eingestellt und der sich ergebende Druck gemessen wird. Aus den so erhaltenen Referenzpunkten kann bei einer Messung eines zu prüfenden Filters 14 bzw. Katalysators auf einen Beladungszustand bzw. eine Verschmutzung geschlossen werden. In einem abschließenden Schritt wird dann ein konkret zu untersuchender Filter 14 bzw. Katalysator entsprechend geprüft, wonach aus dem sich dabei einstellenden Druck auf eine Durchlässigkeit und einen Beladungszustand des Filters 14 bzw. Katalysators oder auch auf die Homogenität und Gleichförmigkeit eines Filtersubstrates oder einer Beschichtung geschlossen werden kann.

Aufgrund einer Wahl eines bestimmten Durchmessers bzw. einer bestimmten Größe für eine Messquerschnittsfläche und einer Wahl eines bestimmten Volumenstromes kann eine Messung standardisiert werden und können Messergebnisse verschiedener, zeitlich versetzter Messungen am selben Prüfling oder Messungen über eine Fertigungscharge an verschiedenen Prüflingen miteinander verglichen werden.

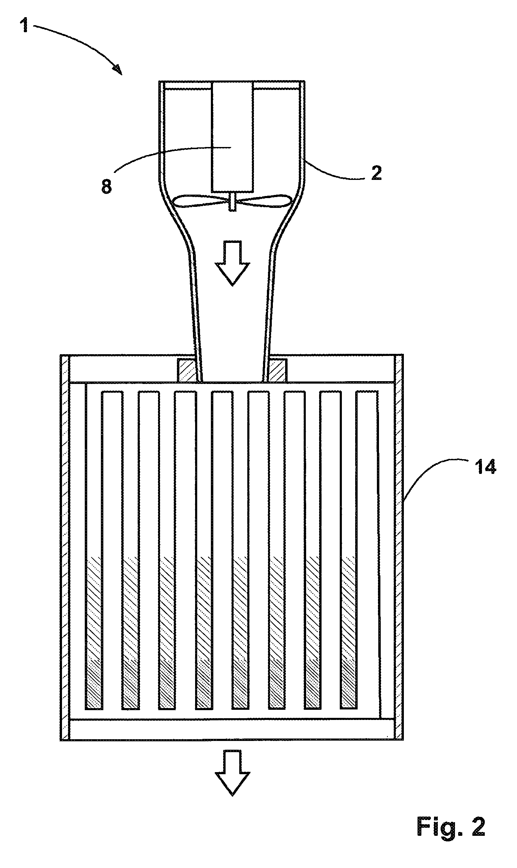

In Fig. 2 ist zur Veranschaulichung des Prinzips ein Querschnitt eines zu prüfenden Filters 14 mit einer darauf angesetzten Prüfeinrichtung 1, welche nicht vom Schutzbereich umfasst ist, dargestellt, wobei durch Anlegen eines Überdruckes gemessen wird. Im Gehäuse 2 wird durch das Axialgebläse 8 ein Überdruck erzeugt, der je nach Durchlässigkeit des Filters 14 abgebaut wird. Je weniger verschmutzt bzw. beladen der Filter 14 ist, umso mehr wird der Überdruck abgebaut bzw. entweicht das geförderte Gas durch den Filter 14. Im Idealfall bzw. nach einer erfolgten Reinigung entspricht die Durchlässigkeit des Filters 14 jener eines neuen Filters.

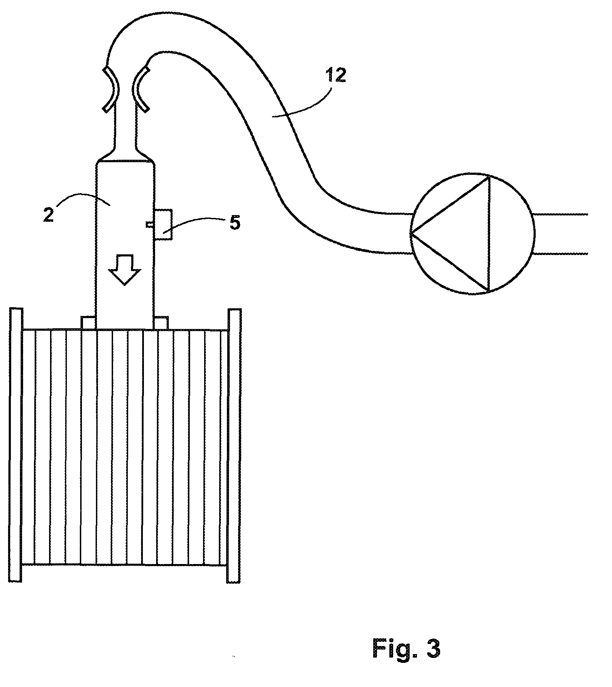

In Fig. 3 ist eine erfindungsgemäße Prüfeinrichtung 1 dargestellt. In diesem Fall ist das Gehäuse 2 ebenfalls länglich, aber zylindrisch ausgebildet. Des Weiteren ist wie bei der Prüfeinrichtung 1 gemäß Fig. 1 ein Drucksensor 5 vorgesehen. Im Unterschied zur Prüfeinrichtung 1 gemäß Fig. 1 ist allerdings nur das erste Ende 3 des Gehäuses 2 offen. Das zweite Ende 4 des Gehäuses 2, das dem ersten Ende 3 des Gehäuses 2 gegenüberliegt, ist im Wesentlichen verschlossen und steht mit einer Leitung 12 in Kontakt, über welche Druckluft zugeführt wird. In diesem Fall ist ein Fördermittel im Inneren des Gehäuses 2 entbehrlich. Entlang der Leitung 12 können wie dargestellt eine Drossel und gegebenenfalls vorgeschaltet ein Ventil vorgesehen sein, damit wie bei der Prüfeinrichtung 1 gemäß Fig. 1 ein definierter Volumen- oder Massenstrom bzw. Überdruck einstellbar ist. Der Vorteil dieser Ausführungsvariante liegt darin, dass auf externe Quellen, beispielsweise eine in einer Reparaturwerkstätte üblicherweise vorhandene Druckluftleitung, zurückgegriffen werden kann.

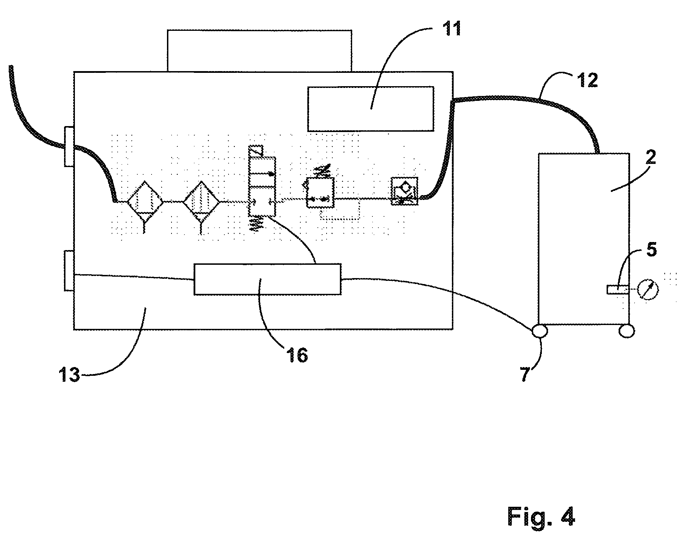

In Fig. 4 ist eine weitere Ausführungsvariante dargestellt, welche der Ausführungsvariante gemäß Fig. 3 ähnlich ist. In diesem Fall ist das Gehäuse 2 mit einer Leitung 12 mit einem Behälter 13 bzw. Handkoffer verbunden, in dem die Regeleinrichtung 6 angeordnet ist. Die Regeleinrichtung 6, die im Handkoffer angeordnet ist, umfasst eine Drossel und/oder ein Ventil, sodass extern über einen Druckluftanschluss am Handkoffer zugeführte Druckluft auf einen definierten Druck einstellbar und in dieser Weise dem Gehäuse 2 zuleitbar ist. Über einen Stromanschluss kann eine Stromversorgungseinheit 16 versorgt werden, die unter anderem mit einem in der Dichtung 7 integrierten mechanischen Schalter in Verbindung steht, sodass bei Kontakt mit einer Oberfläche automatisch eine Stromversorgung erfolgt. Des Weiteren ist im Handkoffer insbesondere eine nicht näher dargestellte Recheneinheit vorgesehen, die mit einem im Gehäuse 2 angeordneten Druckluftsensor 5 in Verbindung steht und analog wie bei der in Fig. 1 dargestellten Ausführungsvariante eine Kalibrierung und Auswertung von Messergebnissen erlaubt. Gemeinsam ist dieser Ausführungsvariante mit der Prüfeinrichtung 1 gemäß Fig. 1, dass die Prüfeinrichtung 1 insgesamt einfach und handlich aufgebaut ist und ohne Weiteres transportiert werden kann. Im Unterschied zur Prüfeinrichtung 1 gemäß Fig. 1 erübrigt sich jedoch ein gesondertes Fördermittel, sodass die Prüfeinrichtung 1 gemäß Fig. 4 insgesamt betrachtet noch einfacher aufgebaut ist. Diesbezüglich kann für ein einfaches Transportieren auch vorgesehen sein, dass das Gehäuse 2 samt den Verbindungsleitungen zum Handkoffer in diesem gelagert werden kann, wenn nicht gemessen wird.

Mit einer Prüfeinrichtung 1 gemäß Fig. 1 oder Fig. 4 ist es des Weiteren möglich, durch Variation des Überdruckes eine Drosselkurve eines Filters 14 oder Katalysators zu vermessen. Eine derartige Drosselkurve (Gegendruck über Volumenstrom) ist signifikant für eine Qualität des Filters 14 oder Katalysators und kann ergänzend zur Qualitätsbeurteilung herangezogen werden.

Neben den bereits dargestellten Vorteilen einer erfindungsgemäßen Prüfeinrichtung 1 ist insbesondere auch hervorzuheben, dass das erste Ende 3 des Gehäuses 2 bei allen Ausführungsvarianten mit einem Querschnitt von 5 cm² bis 30 cm² ausgebildet ist. Dies erlaubt es, bei einem einzigen Filter 14 oder Katalysator, insbesondere einem Wall-flow-Filter, einzelne Bereiche der Oberfläche selektiv zu vermessen und damit den Filter 14 bzw. Katalysator auch bereichsabhängig qualitätsmäßig zu beurteilen.

Eine erfindungsgemäße Prüfeinrichtung 1 wird bevorzugt zur manuellen Messung von Prüflingen eingesetzt, kann aber auch als Sensor in automatisierten Prozessen verwendet werden. Insbesondere kann eine Prüfeinrichtung 1 für die Überwachung einer Serienproduktion von Wall-flow-Filtern eingesetzt werden, um z. B. eine Qualität zu prüfen. Dabei können mehrere Prüfeinrichtungen 1 bzw. Sensoren vorgesehen sein, sodass mehrere Prüflinge gleichzeitig und/oder ein Prüfling an mehreren Positionen bzw. segmentweise geprüft werden kann. Beispielsweise kann ein Messkopf mit sieben oder mehr Sensoren vorgesehen sein, wobei mit jedem Sensor gesondert gemessen und aus den Einzelergebnissen ein Bild über eine Homogenität eines Prüflings erhalten wird bzw. diesbezüglich eine Aussage getroffen werden kann. Sind sieben Sensoren für eine Parallelmessung vorgesehen, so sind diese möglichst dicht aneinander angeordnet, indem sechs Sensoren an den Eckpunkten eines Sechsecks und der siebente Sensor im Zentrum des Sechsecks angeordnet sind, was eine kompakte Ausführung ergibt.

## Patentansprüche

1. Prüfeinrichtung (1) zur Messung einer Durchlässigkeit und/oder Homogenität eines in einem Abgastrakt eines Kraftfahrzeuges eingebauten, gas- und/oder flüssigkeitsdurchlässigen Filters (14) oder Katalysators, bei welchem nur ein stromabwärts liegendes Ende zugänglich ist, **dadurch gekennzeichnet, dass** ein gegebenenfalls flexibles Gehäuse (2) mit einem ersten gas- und/oder flüssigkeitsdurchlässigen Ende (3), welches offen ausgebildet und umfangsseitig von einer Dichtung umgeben ist, und einem zweiten Ende (4) und zumindest einem innerhalb des Gehäuses (2) angeordneten Drucksensor (5) und zumindest eine Regeleinrichtung (6), welcher Druckluft über eine Druckluftleitung zugeführt werden kann, mit einer Drossel und/oder einem Ventil vorgesehen sind, wobei mit der Regeleinrichtung (6) Luft mit einem vorbestimmten, variabel einstellbaren Volumen- oder Massenstrom unter einem Überdruck von 0,1 bar bis 0,6 bar zum ersten Ende (3) des Gehäuses (2) transportierbar ist, wobei das Gehäuse (2) im Bereich des zweiten Endes (4) des Gehäuses (2) im Wesentlichen geschlossen ist und wobei eine Leitung (10) am zweiten Ende (4) in das Gehäuse (2) mündet, welche mit der Regeleinrichtung (6) in Verbindung steht.

2. Prüfeinrichtung (1) nach Anspruch 1, **dadurch gekennzeichnet, dass** das erste Ende (3) des Gehäuses (2) mit einer Querschnittsfläche von 5 cm² bis 30 cm², vorzugsweise 10 cm² bis 20 cm², ausgebildet ist.

3. Prüfeinrichtung (1) nach Anspruch 1 oder 2, **dadurch gekennzeichnet, dass** das Gehäuse (2) zylindrisch ausgebildet ist.

4. Prüfeinrichtung (1) nach einem der Ansprüche 1 bis 3, **dadurch gekennzeichnet, dass** die Leitung (12) am zweiten Ende (4) des Gehäuses (2) in das Gehäuse (2) mündet.

5. Prüfeinrichtung (1) nach einem der Ansprüche 1 bis 4, **dadurch gekennzeichnet, dass** die Regeleinrichtung (6) in einem Behälter (13) mit einem Griff oder Tragegurt angeordnet ist und der Behälter (13) außenseitig einen Druckluftanschluss und optional einen Stromanschluss aufweist.

6. Prüfeinrichtung (1) nach einem der Ansprüche 1 bis 5, **dadurch gekennzeichnet, dass** eine elastische stabförmige Sonde vorgesehen ist, die einen Durchmesser von weniger als 1 mm aufweist und am Gehäuse (2) abnehmbar oder abrollbar angeordnet ist.

7. Verfahren zur Messung einer Durchlässigkeit und/oder Homogenität eines gas- und/oder flüssigkeitsdurchlässigen Filters (14) oder Katalysators, insbesondere eines in einem Abgastrakt eines Kraftfahrzeuges eingebauten Filters (14) oder Katalysators, **dadurch gekennzeichnet, dass** ein gegebenenfalls flexibles Gehäuse (2) einer Prüfeinrichtung, welche nach einem der Ansprüche 1 bis 6 ausgebildet ist, mit einem ersten gas- und/oder flüssigkeitsdurchlässigen Ende (3) und einem zweiten Ende (4) mit dem ersten Ende (3) an eine größer als ein Querschnitt des ersten Endes (3) ausgebildete gas- und/oder flüssigkeitsdurchlässige Oberfläche (15) des Filters (14) oder Katalysators angestellt wird, wonach das Gehäuse (2) im Inneren mit einem vorbestimmten, definierten Volumen- oder Massenstrom beaufschlagt wird, sodass Luft in den Filter (14) oder Katalysator gepresst wird, und ein sich im Gehäuse (2) einstellender Druck gemessen wird, wonach aus dem sich einstellenden Druck eine Durchlässigkeit und/oder Homogenität des Filters (14) oder Katalysators ermittelt wird.

8. Verfahren nach Anspruch 7, **dadurch gekennzeichnet, dass** an verschiedenen Bereichen der Oberfläche (15) des Filters (14) oder Katalysators Messungen durchgeführt werden.

## Claims

1. A test device (1) for measurement of a permeability and/or homogeneity of a gas- and/or liquid-permeable filter (14) or catalyst, installed in an exhaust tract of a motor vehicle, in which only an end lying downstream is accessible, **characterized in that** an optionally flexible housing (2) with a first gas- and/or liquid-permeable end (3), which is constructed so as to be open and is surrounded circumferentially by a seal, and with a second end (4) and with at least one pressure sensor (5) arranged within the housing (2), and at least one regulating device (6), to which compressed air can be fed via a compressed air line, are provided with a throttle and/or a valve, wherein with the regulating device (6) air with a predetermined, variably adjustable volume- or mass flow rate is able to be transported under an excess pressure of 0.1 bar to 0.6 bar to the first end (3) of the housing (2), wherein the housing (2) is substantially closed in the region of the second end (4) of the housing (2) and wherein a line (10) at the second end (4) opens into the housing (2), which line is connected to the regulating device (6).

2. The test device (1) according to Claim 1, **characterized in that** the first end (3) of the housing (2) is constructed with a cross-sectional area of 5 cm² to 30 cm², preferably 10 cm² to 20 cm².

3. The test device (1) according to Claim 1 or 2, **characterized in that** the housing (2) is constructed so as to be cylindrical.

4. The test device (1) according to one of Claims 1 to 3, **characterized in that** the line (12) at the second end (4) of the housing (2) opens into the housing (2).

5. The test device (1) according to one of Claims 1 to 4, **characterized in that** the regulating device (6) is arranged in a container (13) with a handle or carrying strap, and the container (13) has externally a compressed air connection and optionally an electrical connection.

6. The test device (1) according to one of Claims 1 to 5, **characterized in that** an elastic rod-shaped probe is provided, which has a diameter of less than 1 mm and is arranged on the housing (2) so as to be able to be taken off or rolled off.

7. A method for measuring a permeability and/or homogeneity of a gas- and/or liquid-permeable filter (14) or catalyst, in particular of a filter (14) or catalyst installed in an exhaust tract of a motor vehicle, **characterized in that** an optionally flexible housing (2) of a test device, which is constructed according to one of Claims 1 to 6, with a first gas- and/or liquid-permeable end (3) and a second end (4), is placed with the first end (3) against a gas- and/or liquid-permeable surface (15) of the filter (14) or catalyst, which surface is constructed greater than a cross-section of the first end (3), after which the housing (2) is acted upon in the interior with a predetermined, defined volume- or mass flow rate, so that air is pressed into the filter (14) or catalyst, and a pressure occurring in the housing (2) is measured, after which, from the occurring pressure, a permeability and/or homogeneity of the filter (14) or catalyst is determined.

8. The method according to Claim 7, **characterized in that** measurements are carried out at various regions of the surface (15) of the filter (14) or catalyst.

## Revendications

1. Dispositif de test (1) pour mesurer une perméabilité et/ou homogénéité d'un filtre (14) ou catalyseur perméable aux gaz et/ou liquides monté dans une trajet de gaz d'échappement d'un véhicule automobile, dans lequel seule une extrémité située en aval est accessible, **caractérisé en ce que** un boîtier (2) flexible le cas échéant, comportant une première extrémité (3) perméable aux gaz et/ou liquides, qui a une configuration ouverte et est entourée sur sa circonférence par un joint d'étanchéité, et une deuxième extrémité (4) et au moins un capteur de pression (5) disposé à l'intérieur du boîtier (2), et au moins un dispositif de régulation (6), dans lequel de l'air pressurisé peut être alimenté par l'intermédiaire d'une conduite d'air pressurisé, comportant un étranglement et/ou une soupape sont prévus, dans lequel avec le dispositif de régulation (6) de l'air peut être transporté avec un débit volumique ou un début massique réglable de manière variable sous une surpression de 0,1 bar à 0,6 bar vers la première extrémité (3) du boîtier (2), dans lequel le boîtier (2) est essentiellement fermé au niveau de la deuxième extrémité (4) du boîtier (2) et dans lequel une conduite (10) débouche à la deuxième extrémité (4) dans le boîtier (2), qui est en liaison avec le dispositif de régulation (6).

2. Dispositif de test (1) selon la revendication 1, **caractérisé en ce que** la première extrémité (3) du boîtier (2) est réalisée avec une surface de section transversale de 5 cm² à 30cm², de préférence 10 cm² à 20 cm².

3. Dispositif de test (1) selon la revendication 1 ou 2, **caractérisé en ce que** le boîtier (2) a une configuration cylindrique.

4. Dispositif de test (1) selon une des revendications 1 à 3, **caractérisé en ce que** la conduite (12) débouche à la deuxième extrémité (4) du boîtier (2) dans le boîtier (2).

5. Dispositif de test (1) selon une des revendications 1 à 4, **caractérisé en ce que** le dispositif de régulation (6) est disposé dans un contenant (13) avec une poignée ou une sangle de transport et le contenant (13) présente du côté extérieur un raccord d'air pressurisé et optionnellement un raccord électrique.

6. Dispositif de test (1) selon une des revendications 1 à 5, **caractérisé en ce que** une sonde élastique en forme de barre est prévue, qui présente un diamètre inférieur à 1 mm et est disposée de manière amovible ou pouvant être déroulée sur le boîtier (2).

7. Procédé de mesure d'une perméabilité et/ou homogénéité d'un filtre (14) ou catalyseur perméable aux gaz et/ou au liquides, notamment d'un filtre (14) ou catalyseur monté dans un trajet de gaz d'échappement d'un véhicule automobile, **caractérisé en ce que** un boîtier (2) flexible le cas échéant d'un dispositif de test, qui est configuré conformément à une des revendications 1 à 6, est amorcé avec une première extrémité (3) perméable aux gaz et/ou liquides et une deuxième extrémité (4) avec la première extrémité (3) sur une surface (15) perméable au gaz et/ou liquide du filtre (14) ou catalyseur plus grande qu'une section transversale de la première extrémité (3), après quoi le boîtier (2) est sollicité à l'intérieur avec un débit volumique ou un débit massique défini prédéterminé, de sorte que l'air soit pressé dans le filtre (14) ou le catalyseur, et une pression s'établissant dans le boîtier (2) est mesurée, après quoi une perméabilité et/ou homogénéité du filtre (14) ou catalyseur est déterminée d'après la pression qui s'établit.

8. Procédé selon la revendication 7, **caractérisé en ce que** des mesures sont effectuées sur différentes zones de la surface (15) du filtre (14) ou catalyseur.
